# EUROPÄISCHE PATENTSCHRIFT

(11) **EP 0 447 654 B1**
(45) Veröffentlichungstag und Bekanntmachung des Hinweises auf die Patenterteilung: **28.06.1995**
(21) Anmeldenummer: 90124873.2
(22) Anmeldetag: 20.12.1990
(51) Int. Cl.: G11B 5/024, G11B 23/50, G11B 3/58

(54) **Entmagnetisierungseinrichtung für magnetische Aufzeichnungsträger**
Apparatus for degaussing magnetic storage media
Dispositif de désaimantation pour supports d'enregistrement magnétiques

(30) Priorität: 21.03.1990 DE 9003286 U
(43) Veröffentlichungstag der Anmeldung: 25.09.1991
(73) Patentinhaber: BASF Magnetics GmbH, 68165 Mannheim (DE)
(72) Erfinder: Scholtysik, Bernd, Dr., W-8000 München 80 (DE); Toral, José, W-8000 München 70 (DE); Brandstetter, Hermann, Dipl.-Ing., W-8000 München 70 (DE); Baumann, Manfred, Dipl.-Ing., W-8000 München 40 (DE)
(74) Vertreter: Langfinger, Klaus-Dieter, Dr.

(56) Entgegenhaltungen:
- EP-A- 0 142 238
- EP-A- 0 265 095
- FR-A- 1 441 742

## Beschreibung

Die Neuerung betrifft eine Einrichtung zur Entmagnetisierung eines oder mehrerer bandförmiger aufgewickelter magnetischer Aufzeichnungsträger, bestehend aus einer mit Wechselstrom betriebenen mit Erregerwicklungen versehenen Spule, in deren Innenraum der oder die Aufzeichnungsträger einführbar sind.

Eine derartige Einrichtung ist aus der GB 2 130 001 bekannt. Nach der Lehre dieses Dokuments wird eine mit Magnetband bewickelte Spule in radialer Richtung in den Innenraum eines Elektromagneten geschoben, wobei dessen Feldverlauf im wesentlichen senkrecht zur Wickelebene und parallel zur Einschieberichtung der Spule verläuft. Durch einen aufgeladenen Kondensator und die Wicklungen des Elektromagneten wird ein Schwingkreis gebildet, dessen Wechselfeld die Aufzeichnung der Magnetbandspule, die in dieser Schubladen-Löschdrossel um die Wickelachse rotiert, löscht. Diese Einrichtung erfordert eine umständliche Handhabung und ist beispielsweise kaum zum Entmagnetisieren mehrerer übereinander gestapelter aufgewickelter Aufzeichnungsträger geeignet.

Weitere aus dem Stand der Technik bekannte Entmagnetisierungseinrichtungen sind beispielsweise in der DE-PS 37 36 024 der Anmelderin beschrieben. In der genannten DE-PS ist eine Entmagnetisierungseinrichtung beschrieben, welche aus einem mit Wechselstrom betriebenen mit Erregerwicklungen versehenen Elektromagneten besteht, durch dessen beiderseits des zu entmagnetisierenden Aufzeichnungsträgers angeordnete Joche der Aufzeichnungsträger mittels einer Transporteinrichtung bewegt wird und wobei zwischen den einander gegenüberstehender Jochen ein im wesentlichen senkrechter Wechselfeldverlauf besteht, wobei die magnetischen Aufzeichnungsträger in dem freien Raum zwischen den Jochen zunächst einen Bereich konstanter Flußdichte durchlaufen, in dem der senkrechte Abstand der beiden Joche in Bezug auf die Laufrichtung und quer dazu konstant ist und anschließend einen weiteren Bereich durchlaufen, in dem der senkrechte Abstand der Joche monoton zunimmt und die Flußdichte abnimmt. Eine derartige Einrichtung kann in der Tat bis zu 15 übereinander gestapelte aufgewickelte Aufzeichnungsträger, sogenannte Pancakes in einem Durchgang gleichzeitig löschen, hat aber ein enormes Volumen und Gewicht und ist daher sowohl in der Anschaffung wie auch im Betrieb überaus kostspielig.

Daher bestand die Aufgabe, eine Einrichtung der genannten gattungsmäßigen Art zu finden, welche
- einen einfachen Aufbau hat
- mit geringen Energiekosten betreibbar ist
- aus einer Produktionslinie kommende gegebenenfalls komplett verpackte Pancakes mit schneller Zykluszeit beziehungsweise Durchlaufzeit zu entmagnetisieren vermag.

Erfindungsgemäß wurde die Aufgabe mit einer Einrichtung gelöst, bestehend aus einer zylindrische Spule, deren Feldverlauf im wesentlichen parallel zur Wickelebene eines eingeführten Aufzeichnungsträgers verläuft, und durch eine Hubvorrichtung, über die der oder die Aufzeichnungsträger in axialer Richtung der Spule in dieselbe einführbar und ausführbar ist/sind, wobei die Wickelebene eines eingeführten Aufzeichnungsträgers parallel zur axialen Richtung der Spule orientiert ist.

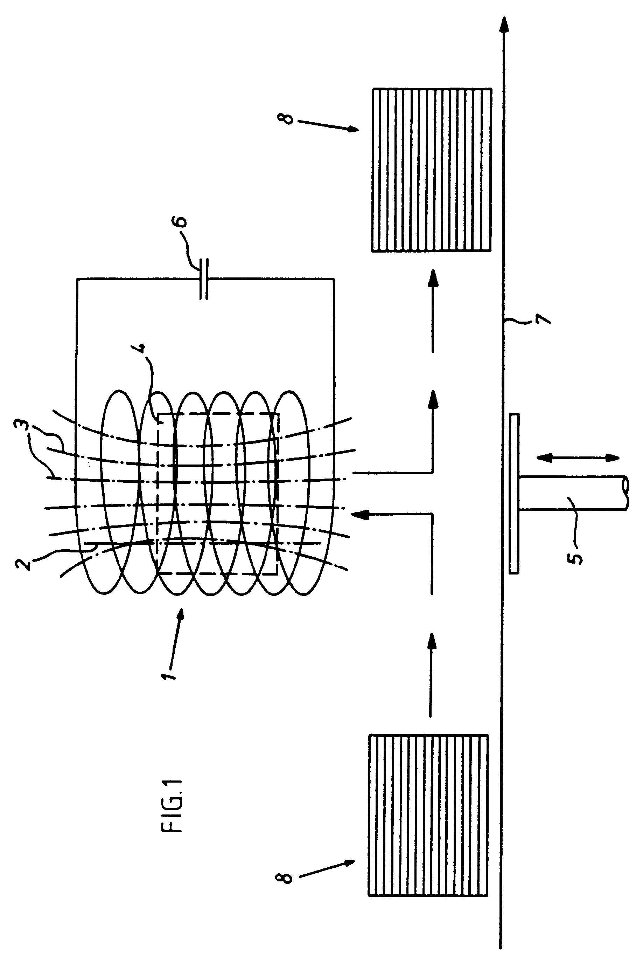

Weitere Einzelheiten der Erfindung gehen aus dem Unteranspruch, der Beschreibung und der Figur hervor.

Die Erfindung wird nun anhand der Figur, welche einen schematischen Querschnitt durch die neuerungsgemäße Entmagnetisierungseinrichtung zeigt, näher geschildert. Auf einem Transportband (7) werden die magnetischen Aufzeichnungsträger (8) in Pfeilrichtung zu der Löscheinrichtung (1) transportiert. Diese besteht aus einem Solenoid mit zylindrischen Spulenwicklungen, die über einen aufgeladenen Kondensator (6) betrieben werden kann. Hat der Aufzeichnungsträger beziehungsweise der Stapel gerade die Einrichtung (1) erreicht, so hält das Transportband an, und der Stapel (8) wird durch eine nicht näher dargestellte Hubvorrichtung (5) in den Innenraum der Einrichtung (1) gehoben, so daß die Aufzeichnungsträger sich koaxial in der Spule befinden. Dann wird der Kondensator (6) über die Wicklungen der Spule entladen, und durch das in der Form einer gedämpften Schwingung entstandene Wechselfeld werden die Magnetbandspulen beziehungsweise der Stapel vollständig gelöscht. Die neuerungsgemäße Einrichtung arbeitet dabei sehr effizient, da der Feldverlauf (3) des Wechselfeldes im wesentlichen parallel zur Wickelebene (2) der Aufzeichnungsträger (4) verläuft, ganz im Gegensatz zum nächstgelegenen Stand der Technik, dem bereits zitierten Dokument GB 2 130 001. Es hat sich gezeigt, daß durch das im Innenraum der Spule entstandene relativ homogene Magnetfeld auch Aufzeichnungsträger hoher und höchster Koerzitivkraft schnell und sicher vollständig löschbar sind.

Danach wird der Stapel durch die Hubvorrichtung auf das Transportband abgesetzt, worauf die Einrichtung nach Laden des Kondensators zur Löschung des nächsten Stapels bereit ist und so weiter.

### Beispiel 1

In einem Anwendungsbeispiel wurde eine Kondensatorbatterie mit einer Kapazität von 3 mF mit einer Ladespannung von 3 kV aufgeladen. Die zylindrische Löschspule hatte einen Außendurchmesser von 950 mm, einen Innendurchmesser von 600 mm sowie eine Höhe von 500 mm, die Masse der Kupferwicklungen betrug 700 kg. Ein Stapel von acht übereinander befindlichen 1/2-Zoll breiten Pancakes mit einem Stapeldurchmesser von 16 Zoll wurde in den Innenraum des Solenoids gebracht, worauf die im Kondensator gespeicherte Energie über den gebildeten Schwingkreis mit einer Eigenfrequenz von 50 Hz entladen wurde. Die Abklingzeit betrug einige Sekunden und nach 5 Sekunden wurde der Pancake-Stapel wieder aus der Einrichtung herausgehoben. Eine Nachmessung aller Pancakes, welche ein Videoband mit einer Koerzitivkraft von 48 kA/m enthielt, ergab, daß das Band völlig und gleichmäßig gelöscht war.

### Beispiel 2

Dabei wurde die gleiche Anordnung wie im Beispiel 1 verwendet, jedoch wurde ein Stapel von 25 jeweils 3,81 mm breiten Pancakes in einer kompletten Styropor-Verpackung, wie in der deutschen Anmeldung Aktenzeichen G 89 12 747 beschrieben, verpackt entmagnetisiert.

### Beispiel 3

Verfahren wurde wie im Beispiel 2, jedoch wurde ein Pancakestapel in einer Verpackung wie in der deutschen Anmeldung G 89 12 749 beschrieben, in der neuerungsgemäßen Entmagnetisierungseinrichtung gelöscht.

## Patentansprüche

1. Einrichtung zur Entmagnetisierung eines oder mehrerer bandförmiger aufgewickelter magnetischer Aufzeichnungsträger, bestehend aus einer mit Wechselstrom betriebenen mit Erregerwicklungen versehenen Spule, in deren Innenraum der oder die aufgewickelten Aufzeichnungsträger einführbar sind, gekennzeichnet durch eine zylindrische Spule (1), deren Feldverlauf (3) im wesentlichen parallel zur Wickelebene (2) eines eingeführten Aufzeichnungsträgers (4) verläuft, und durch eine Hubvorrichtung (5), über die der oder die Aufzeichnungsträger (4) in axialer Richtung der Spule in dieselbe (1) einführbar und ausführbar ist/sind, wobei die Wickelebene eines eingeführten Aufzeichnungsträgers (4) parallel zur axialen Richtung der Spule orientiert ist.

2. Einrichtung nach Anspruch 1, dadurch gekennzeichnet, daß die Spule (1) zusammen mit einem aufladbaren Kondensator (6) einen Schwingkreis bildet, dessen abklingende Schwingung zur Entmagnetisierung des Aufzeichnungsträgers dient.

## Claims

1. An apparatus for degaussing one or more tape-type wound magnetic recording media, comprising a coil which is operated with alternating current and which is provided with exciter windings and into the interior space of which the wound recording medium/media can be introduced, which apparatus comprises a cylindrical coil (1), the course (3) of the field of which extends substantially parallel to the winding plane (2) of an introduced recording medium (4), and a lifting device (5), by means of which the recording medium/media (4) can be introduced, in the axial direction of the coil, into the latter (1) and removed, the winding plane of an introduced recording medium (4) being oriented parallel to the axial direction of the coil.

2. The apparatus as claimed in claim 1, wherein the coil (1) forms, together with a chargeable capacitor (6), an oscillating circuit, the decaying oscillation of which serves to degauss the recording medium.

## Revendications

1. Dispositif de désaimantation d'un ou de plusieurs supports magnétiques d'enregistrement en forme de bande enroulés, constitué d'une bobine pourvue d'enroulements d'excitation et alimentée en courant alternatif à l'intérieur de laquelle peuvent être introduits le ou les supports d'enregistrement enroulés, caractérisé par une bobine cylindrique (1) dont les lignes de champ (3) sont sensiblement parallèles au plan (2) de l'enroulement d'un support d'enregistrement (4) introduit, et par un dispositif élévateur (5) par lequel le ou les supports d'enregistrement peut ou peuvent être introduit(s) dans cette bobine (1) et en être sorti(s) dans la direction axiale de celle-ci, le plan de l'enroulement d'un support d'enregistrement (4) introduit étant orienté parallèlement à la direction axiale de la bobine.

2. Dispositif selon la revendication 1, caractérisé par le fait que la bobine (1) forme avec un condensateur chargeable (6) un circuit oscillant dont l'oscillation déclinante sert à la désaimantation du support d'enregistrement.
